# EUROPÄISCHE PATENTANMELDUNG

(11) **EP 4 417 379 A1**
(43) Veröffentlichungstag der Anmeldung: **21.08.2024**
(21) Anmeldenummer: 24154306.5
(22) Anmeldetag: 29.01.2024
(51) Int. Cl.: B25J 15/04

(54) **WERKZEUGHALTEVORRICHTUNG, WERKZEUGWECHSELVORRICHTUNG UND VERFAHREN ZUM WECHSELN VON WERKZEUGEN**

(30) Priorität: 15.02.2023 DE 102023103600
(71) Anmelder: Lisa Dräxlmaier GmbH, 84137 Vilsbiburg (DE)
(72) Erfinder: Grötzner, Thomas, 84036 Landshut (DE); Bauer, Andreas, 94577 Winzer (DE); Aschenbrenner, Albert, 84178 Kröning (DE); Grötzinger, Christian, 84335 Mitterskirchen (DE)

(57) **Zusammenfassung**

Werkzeughaltevorrichtung (1) zum Halten von zumindest einem Werkzeug (20, 30), die Werkzeughaltevorrichtung (1) umfassend: einen ortsfesten Grundkörper (3) mit zumindest einer Ausnehmung (4) für das Werkzeug (20, 30), eine Halteeinrichtung (10), die dazu ausgebildet ist, die translatorische Bewegungsfreiheit des Werkzeugs (20, 30) in Bezug auf den Grundkörper (3) auf einen Freiheitsgrad zu beschränken, wenn das Werkzeug (20, 30) zumindest abschnittsweise in der Ausnehmung (4) angeordnet ist, und eine Rotationsblockiereinrichtung (15), die dazu ausgebildet ist, eine Drehbewegung des Werkzeugs (20, 30) in Bezug auf den Grundkörper (3) zu blockieren, wenn das Werkzeug (20, 30) eine vordefinierte Position und eine vordefinierte Ausrichtung in der Ausnehmung (4) aufweist.

## Beschreibung

### Technisches Gebiet

Die vorliegende Erfindung betrifft eine Werkzeughaltevorrichtung zum Halten von zumindest einem Werkzeug. Die Werkzeughaltevorrichtung umfasst einen Grundkörper, eine Halteeinrichtung und eine Rotationsblockiereinrichtung. Vorzugsweise ist die Werkzeughaltevorrichtung ein Bestandteil einer Werkzeugwechselvorrichtung.

Dementsprechend betrifft die vorliegende Erfindung auch eine Werkzeugwechselvorrichtung, die eine Werkzeughaltevorrichtung und einen Roboterarm aufweist.

Ein Verfahren zum Wechseln von Werkzeugen, welches die gleiche erfinderische Idee verwirklicht, ist ebenfalls Gegenstand der vorliegenden Erfindung.

### Stand der Technik

Moderne Montageprozesse sind häufig vollständig automatisiert oder zumindest teilautomatisiert. Das heißt, dass die einzelnen Montageschritte der Montageprozesse häufig ohne menschliches Zutun, oder mit so wenig wie möglich menschlichen Zwischeninteraktionen, durch Maschinen, insbesondere Roboter, ausgeführt werden. Wenn derartige Montageprozesse auch Montageschritte umfassen, bei denen zwei Bauteile miteinander verschraubt werden müssen, kommen regelmäßig Montageroboter zum Einsatz. Die Montageroboter werden insbesondere zum Verschrauben von Bauteilen benutzen. Beispielsweise können derartige Montageroboter dazu ausgebildet sein, mittels eines ersten Werkzeugs Schraubverbindungen mit Schrauben, die einen Innensechskant-Schraubkopf, beispielsweise einem Inbus-Schraubkopf, aufweisen, herzustellen. Mittels eines zweiten, vom ersten Werkzeug verschiedenen Werkzeugs können die gleichen Montageroboter Schraubverbindungen mit Schrauben, die einen Außensechskant-Schraubkopf aufweisen, herstellen.

Bei den Montagerobotern besteht folglich die Notwendigkeit eine Werkzeugwechselvorrichtung bereitzustellen, mittels deren Hilfe das benötigte Werkzeug mit dem Montageroboter verbunden werden kann und/oder mittels denen das Werkzeug vom Montageroboter entfernt werden kann. Gleichzeitig sollten diese Werkzeugwechselvorrichtung dazu ausgebildet sein, die Werkzeuge während des Nichtgebrauchs durch den Montageroboter sachgerecht zu halten bzw. zu verstauen.

Hierfür sind im Stand der Technik Vorrichtungen bekannt, welche Greifer oder andere Fixiereinrichtungen aufweisen, die dazu ausgebildet sind, sich kraftschlüssig mit dem Werkzeug zu verbinden, um das Werkzeug vom Montageroboter abzuziehen oder auf den Montageroboter aufzustecken. Damit das Werkzeug mit dem Montageroboter verbunden werden kann, muss das Werkzeug in Bezug auf den Montageroboter exakt ausgerichtet werden. Dies wird regelmäßig dadurch realisiert, dass die Position und insbesondere die Ausrichtung des entsprechenden Werkzeugs durch eine Sensorik bestimmt wird und der Montageroboter dann entsprechend an das Werkzeug herangeführt wird oder das Werkzeug in Bezug auf den Montageroboter ausgerichtet wird.

Die aus dem Stand der Technik bekannten Vorrichtungen haben jedoch den Nachteil, dass die Vorrichtungen einen komplexen Aufbau aufweisen und dementsprechend kostenintensiv in der Herstellung und im Betrieb sind. Ferner sind die aus dem Stand der Technik bekannten Vorrichtungen regelmäßig sehr wartungsintensiv.

### Beschreibung der Erfindung

Ausgehend von dem oben aufgeführten Stand der Technik ist es eine Aufgabe der vorliegenden Erfindung, eine Werkzeughaltevorrichtung zum Halten eines Werkzeugs anzugeben, welches die oben genannten Probleme und Nachteile des Standes der Technik ausräumt. Es ist insbesondere eine Aufgabe der vorliegenden Erfindung, eine Werkzeughaltevorrichtung bereitzustellen, die kostengünstig hergestellt werden kann, möglichst wartungsfrei betrieben werden kann, und zur automatisierten Verwendung in einer Werkzeugwechselvorrichtung besonders gut geeignet ist.

Diese Aufgabe wird mit einem Klemmsystem gemäß Anspruch 1 gelöst. Vorteilhafte Weiterbildungen der Erfindung sind Gegenstand der abhängigen Ansprüche und/oder werden in der nachfolgenden Beschreibung erläutert.

Die erfindungsgemäße Lösung besteht darin, eine Werkzeughaltevorrichtung anzugeben, die dazu geeignet ist, zumindest ein Werkzeug, vorzugsweise mehrere Werkzeuge und besonders bevorzugt mehrere Werkzeuge gleichzeitig, zu halten. Vorteilhafterweise wird jedes Werkzeug in einer vordefinierten Position und mit einer vordefinierten Ausrichtung in Bezug auf die Werkzeughaltevorrichtung durch die Werkzeughaltevorrichtung gehalten

Unter dem Begriff "vordefinierte Position" wird im Sinne dieser Erfindung ein ortsfester Lagerort des jeweiligen Werkzeugs verstanden.

Unter dem Begriff "vordefinierte Ausrichtung" wird im Sinne dieser Erfindung insbesondere eine vordefinierte Drehwinkelposition des Werkzeugs verstanden.

Erfindungsgemäß umfasst die Werkzeughaltevorrichtung einen ortsfesten Grundkörper. Der Grundkörper weist eine Ausnehmung auf, in die das Werkzeug einbringbar ist. Der Grundkörper kann auch mehrere Ausnehmungen aufweisen. Vorzugsweise ist dann jede der Ausnehmung dazu ausgebildet, dass jeweils ein Werkzeug in die entsprechende Ausnehmung eingebracht werden kann.

Die Werkzeughaltevorrichtung weist erfindungsgemäß auch eine Halteeinrichtung auf. Die Halteeinrichtung kann einteilig am und/oder mit dem Grundkörper ausgebildet sein, insbesondere mit dem Grundkörper urgeformt sein. Alternativ kann die Halteeinrichtung form-, kraft- und/oder stoffschlüssig mit dem Grundkörper verbunden sein. Vorzugsweise ist die Halteeinrichtung im Bereich der Ausnehmung des Grundkörpers, insbesondere in der Ausnehmung des Grundkörpers, vorgesehen.

Die Halteeinrichtung ist funktionell dazu ausgebildet, die translatorische Bewegungsfreiheit des Werkzeugs in Bezug auf den Grundkörper auf einen Freiheitsgrad zu beschränken. Dies ist insbesondere dann der Fall, wenn das Werkzeug zumindest abschnittsweise in der Ausnehmung angeordnet ist. Anders formuliert kann die Halteeinrichtung derart konstruiert und/oder angeordnet sein, dass ein Werkzeug, welches zumindest abschnittsweise in der Ausnehmung angeordnet ist, aufgrund der Halteeinrichtung translatorisch nur noch in einem Freiheitsgrad bewegt werden kann. Beispielsweise kann die Halteeinrichtung derart geformt und/oder angeordnet sein, dass ein Werkzeug, welches durch Einschieben in die Ausnehmung eingebracht wurde, nur noch weiter in die Ausnehmung eingeschoben werden kann und/oder wieder aus der Ausnehmung herausgezogen werden kann. Eine Bewegung des Werkzeugs, die orthogonal zur Einschubbewegung gerichtet ist, wird durch die Halteeinrichtung beschränkt.

Der Ausdruck "beschränkte Freiheitsgrade" hat im Sinne dieser Erfindung die Bedeutung, dass eine translatorische Bewegung in die beschränkten Freiheitsgrade grundsätzlich verhindert wird. Dies schließt jedoch nicht aus, dass vernachlässigbar geringe translatorische Bewegungen in die beschränkten Freiheitsgrade dennoch möglich sind. Beispielsweise können herstellungsbedingte Toleranzen oder funktional zwingend erforderliche Spaltmaße zu geringfügigen translatorischen Bewegungen in den beschränkten Freiheitsgraden führen.

Des Weiteren umfasst die Werkzeughaltevorrichtung eine Rotationsblockiereinrichtung. Die Rotationsblockiereinrichtung ist erfindungsgemäß dazu ausgebildet, eine Drehbewegung des Werkzeugs in Bezug auf den Grundkörper zu blockieren. Dies ist insbesondere dann der Fall, wenn das Werkzeug zumindest abschnittsweise in der Ausnehmung angeordnet ist und eine vordefinierte Ausrichtung aufweist. Beispielsweise kann die Rotationsblockiereinrichtung derart konstruiert und/oder angeordnet sein, dass ein Werkzeug, welches zumindest abschnittsweise in der Ausnehmung angeordnet ist und eine vordefinierte Ausrichtung aufweist, auf Grund der Rotationsblockiereinrichtung nicht mehr gedreht werden kann, insbesondere nicht mehr um eine Drehachse gedreht werden kann.

Der Ausdruck "blockierte Drehbewegung" hat im Sinne dieser Erfindung die Bedeutung, dass eine rotatorische Bewegung um eine Drehachse, insbesondere eine Drehung des Werkzeugs um eine eigene Achse, grundsätzlich verhindert wird. Dies schließt jedoch nicht aus, dass vernachlässigbar geringe rotatorische Bewegungen dennoch möglich sind. Beispielsweise können herstellungsbedingte Toleranzen oder funktional zwingend erforderliche Spaltmaße zu geringfügigen rotatorischen Bewegungen führen.

Vorzugsweise wird die Drehbewegung des Werkzeugs in Bezug auf den Grundkörper durch die Rotationsblockiereinrichtung nur dann blockiert, wenn das Werkzeug in Bezug auf den Grundkörper eine vordefinierte Ausrichtung aufweist. Beispielsweise wird eine Drehbewegung des Werkzeugs so lange nicht von der Rotationsblockiereinrichtung blockiert, bis das Werkzeug die vordefinierte Ausrichtung einnimmt.

Die erfindungsgemäße Werkzeughaltevorrichtung bewirkt vorteilhafterweise, dass das Werkzeug besonders zuverlässig und mit einfachen konstruktiven Mitteln in einer vordefinierten Position und einer vordefinierten Ausrichtung gehalten werden kann. Dies führt zu dem Vorteil, dass die erfindungsgemäße Werkzeughaltevorrichtung kostengünstig hergestellt werden kann, wartungsfrei betrieben werden kann, und zur automatisierten Verwendung in einer Werkzeugwechselvorrichtung besonders gut geeignet ist.

Bei einer beispielhaften Weiterbildung der Werkzeughaltevorrichtung kann die Rotationsblockiereinrichtung zwischen einem Freigabezustand und einem Blockierzustand wechseln. Die Rotationsblockiereinrichtung kann insbesondere unabhängig von der Halteeinrichtung zwischen dem Freigabezustand und dem Blockierzustand wechseln. Bevorzugt blockiert die Rotationsblockiereinrichtung die Drehbewegung des Werkzeugs, wenn sich die Rotationsblockiereinrichtung im Blockierzustand befindet. Wenn sich die Rotationsblockiereinrichtung im Freigabezustand befindet, wird die Drehbewegung des Werkzeugs durch die Rotationsblockiereinrichtung vorzugsweise nicht blockiert. Beispielsweise kann das Werkzeug so lange in Bezug auf den Grundkörper gedreht werden, insbesondere um eine Drehachse gedreht werden, bis die Rotationsblockiereinrichtung vom Freigabezustand in den Blockierzustand wechselt. Vorteilhafterweise wechselt die Rotationsblockiereinrichtung dann vom Freigabezustand in den Blockierzustand, wenn das Werkzeug aufgrund der Drehbewegung die vordefinierte Ausrichtung, insbesondere die vordefinierte Drehwinkelstellung, erreicht.

Bei einer beispielhaften Ausführungsform weist die Rotationsblockiereinrichtung ein Sicherungsmittel auf. Vorzugsweise ist das Sicherungsmittel zwischen einer Eingriffposition und einer Freigabeposition überführbar. Das heißt, dass das Sicherungsmittel zwischen der Eingriffposition und der Freigabeposition hin und her bewegt werden kann. Bevorzugt befindet sich die Rotationsblockiereinrichtung in dem Freigabezustand, wenn sich das Sicherungsmittel in der Freigabeposition befindet. Wenn sich die Rotationsblockiereinrichtung in dem Blockierzustand befindet, kann sich das Sicherungsmittel in der Eingriffposition befinden.

Vorzugsweise ist das Sicherungsmittel in der Eingriffposition dazu ausgebildet, zumindest abschnittsweise in das Werkzeug einzugreifen. Beispielsweise kann das Sicherungsmittel in der Eingriffposition zumindest abschnittsweise formschlüssig in eine korrespondierende Ausnehmung im Werkzeug, insbesondere in eine Bohrung im Werkzeug, eingreifen. Das Sicherungsmittel ist bevorzugt als Sicherungsstift ausgebildet.

Eine Ausführungsform, bei der die Rotationsblockiereinrichtung ein Sicherungsmittel aufweist, bewirkt vorteilhafterweise, dass die Rotationsblockiereinrichtung rein mechanisch ausgebildet ist und mit einfachen konstruktiven Mitteln realisiert werden kann. Dies hat den Vorteil, dass die Werkzeughaltevorrichtung besonders kostengünstig hergestellt werden kann und der Wartungsaufwand im Betrieb weiter reduziert werden kann.

Alternativ oder zusätzlich kann die Rotationsblockiereinrichtung ein Vorspannmittel aufweisen. Das Vorspannmittel ist vorzugsweise dazu ausgebildet, ein Überführen der Rotationsblockiereinrichtung von dem Freigabezustand in den Blockierzustand zu begünstigen. Das Vorspannmittel kann insbesondere dazu ausgebildet sein, das Sicherungsmittel in die Eingriffposition zu drücken und/oder zu ziehen. Durch das Vorspannmittel kann bewirkt werden, dass sich das Werkzeug so lange in Bezug auf den Grundkörper drehen kann, insbesondere um eine Drehachse drehen kann, bis das Werkzeug eine vordefinierte Ausrichtung, insbesondere eine vordefinierte Drehwinkelstellung, einnimmt und das Vorspannmittel das Sicherungsmittel in die Eingriffposition drückt und/oder zieht, so dass durch das Sicherungsmittel ein Weiterdrehen des Werkzeugs blockiert wird. Das Vorspannmittel kann beispielsweise eine Feder, insbesondere eine Spiralfeder, sein.

Eine Rotationsblockiereinrichtung mit einem Vorspannmittel bewirkt vorteilhafterweise, dass die Rotationsblockiereinrichtung rein mechanisch ausgebildet ist und mit einfachen konstruktiven Mitteln realisiert werden kann. Dies hat den Vorteil, dass die Werkzeughaltevorrichtung besonders kostengünstig hergestellt werden kann und der Wartungsaufwand im Betrieb weiter reduziert werden kann.

Bei einer weiteren beispielhaften Ausführungsform der Werkzeughaltervorrichtung weist die Halteeinrichtung eine Form auf, die komplementär zu einer Form im bzw. am Werkzeug ausgebildet ist. Vorzugsweise sind die Form der Halteeinrichtung und die dazu komplementäre Form des Werkzeugs dazu ausgebildet, formschlüssig miteinander in Eingriff gebracht zu werden. Dieser formschlüssige Eingriff kann die Beschränkung der translatorischen Bewegungsfreiheit des Werkzeugs auf einen Freiheitsgrad bewirken.

Beispielsweise kann die Halteeinrichtung eine Nut aufweisen, in die ein Vorsprung des Werkzeugs eingreift, wenn das Werkzeug zumindest abschnittsweise in der Ausnehmung angeordnet ist. Alternativ dazu kann die Halteeinrichtung einen Haltesteg aufweisen. Vorzugsweise ist der Haltesteg dazu ausgebildet, in eine Vertiefung des Werkzeugs, insbesondere in eine Nut des Werkzeugs, einzugreifen wenn das Werkzeug zumindest abschnittsweise in der Ausnehmung angeordnet ist. Dadurch kann die Beschränkung der translatorischen Bewegungsfreiheit des Werkzeugs auf einen Freiheitsgrad rein mechanisch, insbesondere durch Formschluss bewirkt werden.

Eine Ausführungsform bei der die Halteeinrichtung einen Haltesteg aufweist, bewirkt vorteilhafterweise, dass die Halteeinrichtung mit besonders einfachen konstruktiven Mitteln realisiert werden kann. Dies hat den Vorteil, dass die Werkzeughaltevorrichtung besonders kostengünstig hergestellt werden kann und der Wartungsaufwand im Betrieb weiter reduziert werden kann.

Bei einer vorteilhaften Weiterbildung, der vorgenannten Ausführungsform, umfasst die Werkzeughaltevorrichtung, insbesondere die Halteeinrichtung der Werkzeughaltevorrichtung, mehrere, insbesondere zwei, Haltestege. Bevorzugt sind immer zwei Haltestege gegenüberliegend zueinander angeordnet. Davon unabhängig, oder ergänzend dazu, können die zwei Haltestege derart voneinander beabstandet sein, dass zwischen den Haltestegen das Werkzeug anordenbar ist. Dementsprechend kann ein Werkzeug durch zwei Haltestege gehalten werden. Eine Werkzeughaltevorrichtung mit mehrere Haltestegen hat den Vorteil, dass das Werkzeug durch die mehreren Haltestege besonders zuverlässig gehalten werden kann.

Die Ausnehmung des Grundkörpers kann länglich ausgebildet sein. Das heißt, dass das Längenabmaß der Ausnehmung größer ist als die Breite der Ausnehmung. Beispielsweise kann die Ausnehmung ein Langloch im Grundkörper sein.

Bei einer beispielhaften Ausführungsform der Werkzeughaltevorrichtung weist die Ausnehmung eine Öffnung auf. Die Öffnung kann an einem Ende der länglichen Ausnehmung vorgesehen sein. Bei der Ausnehmung kann es sich folglich um ein einseitig geöffnetes Langloch im Grundkörper handeln. Vorzugsweise kann die Öffnung derart ausgebildet sein, dass das Werkzeug über die Öffnung zumindest abschnittsweise in die Ausnehmung eingebracht, insbesondere eingeführt, werden kann. Die Öffnung kann einen sich verengenden Querschnitt aufweisen. Der Querschnitt der Öffnung verengt sich vorzugsweise in die Richtung, in die das Werkzeug bewegt wird, wenn das Werkzeug zumindest abschnittsweise in die Ausnehmung eingebracht wird. Beispielsweise kann die Öffnung trichterförmig ausgebildet sein.

Eine Öffnung, insbesondere eine Öffnung mit einem sich verengenden Querschnitt, bewirkt vorteilhafterweise, dass das Werkzeug besonders einfach in die Ausnehmung des Grundkörpers eingebracht werden kann. Der sich verengende Querschnitt kann insbesondre dazu führen, dass das Werkzeug beim Einbringen in die Ausnehmung in Bezug auf die Ausnehmung zentriert wird. Gleichzeitig ist eine solche Öffnung konstruktiv sehr einfach realisierbar. Die Öffnung kann daher den Vorteil haben, dass die Werkzeughaltevorrichtung besonders gut zur automatisierten Verwendung in einer Werkzeugwechselvorrichtung geeignet ist und gleichzeitig kostengünstig hergestellt und wartungsfrei betrieben werden kann.

Vorzugsweise erstreckt sich die Halteeinrichtung von der Öffnung in Längsrichtung der Ausnehmung bis zu einem der Öffnung gegenüberliegenden Ende der Ausnehmung. Das der Öffnung gegenüberliegenden Ende der Ausnehmung kann als Anschlag für das Werkzeug ausgebildet sein. Vorzugsweise ist die Rotationsblockiereinrichtung an und/oder in dem der Öffnung gegenüberliegenden Ende der Ausnehmung angeordnet.

Dieser strukturelle Aufbau der vorgenannten Ausführungsform bewirkt vorteilhafterweise, dass das Werkzeug über die Öffnung zumindest abschnittsweise in die Ausnehmung eingebracht werden kann. Anschließend kann das Werkzeug in der Ausnehmung, insbesondere in Längsrichtung der Ausnehmung, entlanggeführt werden. Dabei wird die translatorische Bewegungsfreiheit des Werkzeugs durch die Halteeinrichtung vorzugswiese auf einen Freiheitsgrad, insbesondere auf die Einbringrichtung und eine der Einbringrichtung entgegengesetzte Ausbringrichtung des Werkzeugs, beschränkt. Wenn das Werkzeug das der Öffnung gegenüberliegende Ende der Ausnehmung erreicht hat, insbesondere mit dem der Öffnung gegenüberliegenden Ende der Ausnehmung in Anschlag gerät, kann dies die gewünschte vordefinierte Position des Werkzeugs sein. An dieser Position kann das Werkzeug dann so lange gedreht werden, insbesondere um eine Drehachse gedreht werden, bis das Werkzeug die vordefinierte Ausrichtung, insbesondere die vordefinierte Drehwinkelposition, erreicht. Wenn das Werkzeug die vor definierte Ausrichtung, insbesondere die vordefinierte Drehwinkelposition, erreicht, kann die Rotationsblockiereinrichtung vom Freigabezustand in den Blockierzustand wechseln und ein weiteres Drehen des Werkzeugs blockieren.

Der Vorteil einer solchen Ausführungsform ist, dass die Werkzeughaltevorrichtung dann besonders gut zur automatisierten Verwendung in einer Werkzeugwechselvorrichtung geeignet ist, gleichzeitig aber kostengünstig hergestellt und wartungsfrei betrieben werden kann.

Die eingangs genannte Aufgabe wird auch mit einer Werkzeugwechselvorrichtung gemäß Anspruch 9 gelöst. Vorteilhafte Weiterbildungen der Werkzeugwechselvorrichtung ergeben sich aus der nachfolgenden Beschreibung.

Die Werkzeugwechselvorrichtung umfasst erfindungsgemäß zumindest eine Werkzeughaltevorrichtung gemäß den vorgenannten Ausführungen. Dementsprechend treffen sämtliche vorgenannte mögliche Ausführungsformen, Weiterbildungen, Merkmalskombinationen und Vorteile in analoger Weise auch auf die Werkzeugwechselvorrichtung zu.

Zusätzlich zu einer Werkzeughaltevorrichtung kann die Werkzeugwechselvorrichtung einen Roboterarm aufweisen. Der Roboterarm kann dazu ausgebildet sein, mit verschiedenen Werkzeugen form- und/oder kraftschlüssig verbunden zu werden. Gleichzeitig kann der Roboterarm dazu ausgebildet sein, zumindest ein Werkzeug an der Werkzeughaltevorrichtung aufzugeben und aufzunehmen. Beispielsweise kann der Roboterarm, wenn der Roboterarm ein Werkzeug an der Werkzeughaltevorrichtung aufgibt, die Verbindung zum Werkzeug lösen, sobald sich das Werkzeug in der vordefinierten Position und der vordefinierten Ausrichtung befindet. Wenn der Roboterarm ein Werkzeug an der Werkzeughaltevorrichtung aufnimmt, ist es vorteilhafterweise ausreichend, wenn der Roboterarm die vordefinierte Position ansteuert. Da die Ausrichtung des Werkzeugs an dieser Position ebenfalls bekannt, nämlich vordefiniert ist, kann sich der Roboterarm immer wieder gleich mit dem Werkzeug verbinden.

Bei einer vorteilhaften Weiterbildung weist der Roboterarm einen Drehmomentsensor auf. Der Drehmomentsensor ist vorzugsweise dazu ausgebildet, das Blockieren der Drehbewegung des Werkstücks durch die Rotationsblockiereinrichtung zu detektieren.

Die Werkzeugwechselvorrichtung kann Teil eines Montageroboters sein. Der Montageroboter kann dazu ausgebildet sein, Verschraubungen mit verschiedenen Schrauben, insbesondere mit Schrauben, die unterschiedliche Schraubköpfe aufweisen, herzustellen.

Darüber hinaus ist es eine Aufgabe der vorliegenden Erfindung ein Verfahren anzugeben, mit dem ein Werkzeug besonders zuverlässig automatisiert aufgeben werden kann, insbesondere an einer Werkzeughaltevorrichtung, beispielsweise der vorgenannten Werkzeughaltevorrichtung, aufgegeben werden kann.

Diese Aufgabe wird unter Verwirklichung der gleichen erfinderischen Idee mit dem Verfahren gemäß Anspruch 10 gelöst. Vorteilhafte Weiterbildungen des Verfahrens werden in der nachfolgenden Beschreibung erläutert.

Erfindungsgemäß wird ein Verfahren beschrieben, mit dem ein Werkzeug an einer Werkzeughaltevorrichtung aufgegeben werden kann. Bei der Werkzeughaltevorrichtung handelt es sich vorzugsweise um eine Werkzeughaltevorrichtung gemäß den vorgenannten Ausführungen. Dementsprechend treffen sämtliche vorgenannte mögliche Ausführungsformen, Weiterbildungen, Merkmalskombinationen und Vorteile in analoger Weise auch auf das Verfahren zu.

In einem ersten Verfahrensschritt wird das Werkzeug zumindest abschnittsweise in einen Grundkörper der Werkzeughaltevorrichtung, insbesondere in eine Ausnehmung des Grundkörpers der Werkzeughaltevorrichtung, eingebracht. Während und/oder nach dem Einbringen des Werkzeugs wird die translatorische Bewegungsfreiheit des Werkzeugs durch die Werkzeughaltevorrichtung, insbesondere durch eine Halteeinrichtung der Werkzeughaltevorrichtung, auf einen Freiheitsgrad beschränkt.

In einem weiteren Verfahrensschritt, der vorzugsweise nach und/oder während des vorangegangenen Verfahrensschritts ausgeführt wird, kann das Werkzeug so lange um eine Drehachse gedreht werden, bis die Werkzeughaltevorrichtung, insbesondere eine Rotationsblockiereinrichtung der Werkzeughaltevorrichtung, ein weiteres Drehen um die Drehachse blockiert. Vorzugsweise erfolgt das Drehen des Werkstücks um die Drehachse in eine einzige Drehrichtung.

Das erfindungsgemäße Verfahren bewirkt vorteilhafterweise, dass wenige Verfahrensschritte, die jeweils für sich betrachtet und auch in Summe besonders einfach ausführbar sind, ausreichen, um ein Werkzeug an der Werkzeughaltevorrichtung aufzugeben. Dies hat den Vorteil, dass das Verfahren für ein automatisiertes Aufgeben des Werkzeugs besonders gut geeignet ist.

Bei einer vorteilhaften Weiterbildung wird beim Drehen des Werkzeugs der zum Drehen notwendige Drehmoment detektiert. Dadurch kann vorteilhafterweise festgestellt werden, ob die Drehbewegung des Werkzeugs durch die Rotationsblockiereinrichtung blockiert wird.

### Kurze Beschreibung der Zeichnungen

Die oben beschriebenen, unterschiedlichen und beispielhaften Merkmale können erfindungsgemäß miteinander kombiniert werden, soweit dies technisch sinnvoll und geeignet ist. Dies gilt unabhängig davon, ob die jeweiligen Merkmale als Vorrichtungs- oder Verfahrensmerkmal offenbart sind. Weitere Merkmale, Vorteile und Ausführungsformen der Erfindung ergeben sich aus der nachfolgenden Figurenbeschreibung, sowie den in den Figuren dargestellten Ausführungsbeispielen. Es zeigen:
- Fig. 1: eine perspektivische Darstellung eines Ausführungsbeispiels einer Werkzeughaltevorrichtung,
- Fig. 2: eine Seitenansicht des Ausführungsbeispiel der Werkzeughaltevorrichtung gemäß Fig. 1, und
- Fig. 3: eine Schnittansicht des Ausführungsbeispiels der Werkzeughaltevorrichtung gemäß Fig. 1 und Fig. 2.

### Wege zur Ausführung der Erfindung

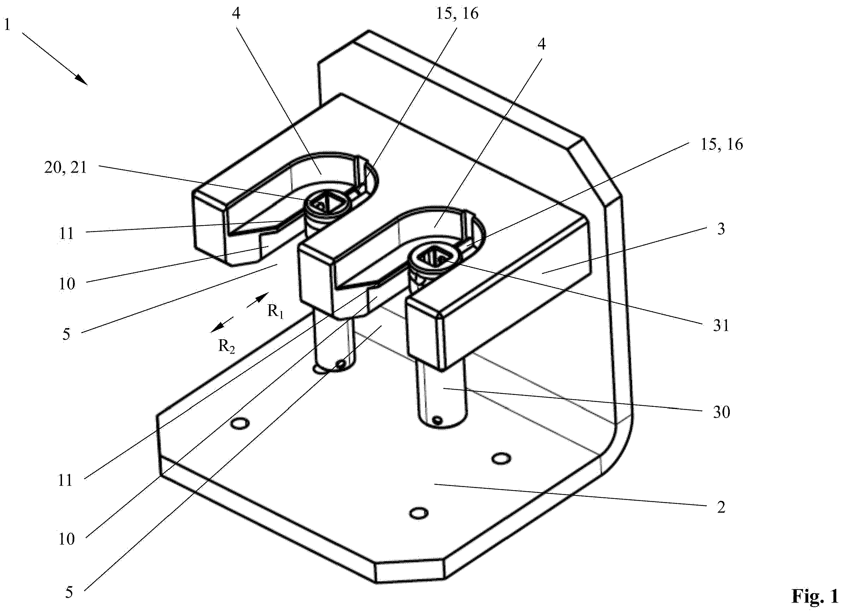

Fig. 1 zeigt eine perspektivische Darstellung eines Ausführungsbeispiels einer Werkzeughaltevorrichtung 1. Die Werkzeughaltevorrichtung 1 ist dazu geeignet, zwei Werkzeuge 20, 30, nämlich ein erstes Werkzeug 20 und ein zweites Werkzeug 30, zu halten. Die zwei Werkzeuge 20, 30 können durch die Werkzeughaltevorrichtung 1 insbesondere in einer vordefinierten Position und einer vordefinierten Ausrichtung gehalten werden.

Die Werkzeughaltevorrichtung 1 umfasst einen Grundkörper 3. Der Grundkörper 3 ist mit einer Basis 2 verbunden, so dass der Grundkörper 3 ortsfest angeordnet ist. Der Grundkörper 3 weist bei dem in Fig. 1 dargestellten Ausführungsbeispiel zwei Ausnehmungen 4 auf.

In jede der Ausnehmungen 4 ist jeweils ein Werkzeug 20, 30 zumindest abschnittsweise einbringbar. Wie in der Abbildung der Fig. 1 zu erkennen, ist in der linken Ausnehmung 4 das erste Werkzeug 20 und in der rechten Ausnehmung 4 das zweite Werkzeug 30 angeordnet. Um das jeweilige Werkzeug 20, 30 in die entsprechende Ausnehmung 4 einbringen zu können, umfasst jede Ausnehmung 4 eine Öffnung 5. Die Öffnungen 5 sind jeweils trichterförmig ausgebildet. Das heißt, dass die Öffnungen 5 einen sich verengenden Querschnitt aufweisen. Dabei verengt sich der Querschnitt in eine Einbringrichtung R₁ der Werkzeuge 20, 30.

Jede der Ausnehmungen 4 ist jeweils eine Halteeinrichtung 10 zugeordnet. Jede der Halteeinrichtungen 10 ist jeweils dazu ausgebildet, die translatorische Bewegungsfreiheit des entsprechenden Werkzeugs 20, 30 in Bezug auf den Grundkörper 3 auf einen Freiheitsgrad zu beschränken. Mit anderen Worten lässt die Halteeinrichtung 10 zu, dass das entsprechende Werkzeug 20, 30 in dem in Fig. 1 dargestellten Ausführungsbeispiel von vorne in die jeweilige Ausnehmung 4 eingebracht werden kann, insbesondere in die Einbringrichtung R₁ in die jeweilige Ausnehmung 4 eingeschoben werden kann, und in eine Ausbringrichtung R₂ aus der entsprechenden Ausnehmung 4 wieder ausgebracht werden kann, insbesondere wieder aus der Ausnehmung 4 herausgezogen werden kann. Die Einbringrichtung R₁ und die Ausbringrichtung R₂ sind in Bezug zueinander entgegengesetzt ausgerichtet und definieren den translatorischen Freiheitsgrad, der durch die Halteeinrichtung 10 nicht beschränkt wird.

Sobald ein Werkzeug 20, 30 zumindest teilweise in die Ausnehmung 4 eingebracht ist, verhindert die jeweilige Halteeinrichtung 10, dass das entsprechende Werkzeuge 20, 30 nach oben aus der Werkzeughaltevorrichtung 1 entfernt, insbesondere nach oben aus der Ausnehmung 4 herausgezogen werden kann. Auch eine zur Einbringrichtung R₁ bzw. Ausbringrichtung R₂ seitliche Bewegung wird durch die entsprechende Halteeinrichtung 10 verhindert. Jede Halteeinrichtung 10 weist zumindest einen Haltesteg 11 auf, dessen Funktionalität weiter unten näher beschrieben wird.

Zusätzlich zur Halteeinrichtung 10 umfasst die Werkzeughaltevorrichtung 1 auch eine Rotationsblockiereinrichtung 15. Die Rotationsblockiereinrichtung 15 ist dazu ausgebildet, eine Drehbewegung des entsprechenden Werkzeugs 20, 30 in Bezug auf den Grundkörper 3 zu blockieren. Dies ist dann der Fall, wenn das entsprechende Werkzeug 20, 30 eine vordefinierte Position aufweist, insbesondere an dem der Öffnung 5 gegenüberliegenden Ende der Ausnehmung 4 angeordnet ist, und eine vordefinierte Ausrichtung, insbesondere eine vordefinierte Drehwinkelposition, in der Ausnehmung 4 eingenommen hat. Noch konkreter wird die Drehbewegung des entsprechenden Werkzeugs 20, 30 in Bezug auf den Grundkörper 3 nur dann durch die Rotationsblockiereinrichtung 15 blockiert, also ausschließlich dann durch die Rotationsblockiereinrichtung 15 blockiert, wenn das entsprechende Werkzeug 20, 30 eine vordefinierte Position und eine vordefinierte Ausrichtung in der Ausnehmung 4 aufweist bzw. eingenommen hat.

Die Rotationsblockiereinrichtung 15 kann zwischen einem Freigabezustand und einem Blockierzustand hin und her wechseln. Wenn sich die Rotationsblockiereinrichtung 15 in dem Freigabezustand befindet, kann das Werkzeug 20, 30 um seine Längsachse D₁, D₂, welche im Folgenden auch als Drehachse D₁, D₂ bezeichnet wird und in Fig. 1 nicht eingezeichnet ist, gedreht werden. Sobald das Werkzeug 20, 30 die vordefinierte Ausrichtung, insbesondere die vordefinierte Drehwinkelposition, erreicht hat, ist die Rotationsblockiereinrichtung 15 dazu ausgebildet, vom Freigabezustand in den Blockierzustand zu wechseln. Im Blockierzustand verhindert die Rotationsblockiereinrichtung 15, dass das Werkzeug 20, 30 in der Ausnehmung 4 weiter um die Drehachse D₁, D₂ gedreht werden kann.

In dem in Fig. 1 dargestellten Ausführungsbeispiel weist die Werkzeughaltevorrichtung 1 zwei Rotationsblockiereinrichtungen 15 auf, wobei jede Rotationsblockiereinrichtung 15 jeweils einer Ausnehmung 4 zugeordnet ist. Die jeweilige Rotationsblockiereinrichtung 15 ist an dem der Öffnung 5 gegenüberliegenden Ende der entsprechenden Ausnehmung 4 angeordnet. Jede der Rotationsblockiereinrichtungen15 weist ein Sicherungsmittel 16 auf, dessen Funktionalität weiter unten näher beschrieben wird.

Bei den Werkzeugen 20, 30 handelt es sich im dargestellten Ausführungsbeispiel jeweils um eine Steckschlüsselnuss 20, 30. Jedes der Werkzeuge 20, 30 weist daher eine Stecksatzausnehmung 21, 31 auf. Über die Stecksatzausnehmung 21, 31 kann das entsprechende Werkzeug 20, 30 mit einem in den Figuren nicht dargestellten Roboterarm verbunden werden.

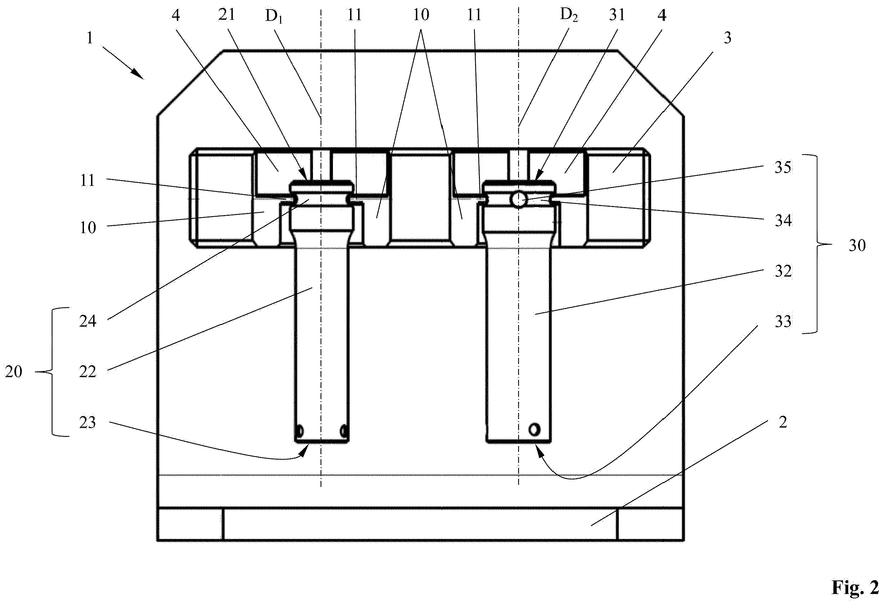

Fig. 2 zeigt eine Seitenansicht des Ausführungsbeispiel der Werkzeughaltevorrichtung gemäß Fig. 1. In Fig. 2 lässt sich der grundsätzliche Aufbau der Werkzeuge 20, 30 und das Zusammenwirken der Werkzeuge 20, 30 mit der jeweiligen Halteeinrichtung 10 besonders gut erkennen.

Das erste Werkzeug 20 umfasst einen Werkzeuggrundkörper 22. An dem der Stecksatzausnehmung 21 gegenüberliegenden Ende des Werkzeuggrundkörpers 22 weist das erste Werkzeug 20 einen Werkzeugkopf 23 auf. Der Werkzeugkopf 23 kann beispielsweise als Werkzeugnuss (auch als Innensechskantnuss bezeichnet) ausgebildet sein. Das erste Werkzeug 20 umfasst eine, in Fig. 2 nicht sichtbare, Bohrung 25. Die Bohrung 25 ist deshalb nicht sichtbar, weil die Ausrichtung, insbesondere die Drehwinkelposition, des zweiten Werkzeugs 20 in Fig. 2 derart gewählt wurde, dass die Bohrung 25 orthogonal zu Blickrichtung des Betrachters verläuft.

Das zweite Werkzeug 30 ist analog zu dem ersten Werkzeug 20 ausgebildet. Dementsprechend umfasst auch das zweite Werkzeug 30 einen Werkzeuggrundkörper 32, einen Werkzeugkopf 33 und eine Bohrung 35. Aufgrund einer zum ersten Werkzeug 20 unterschiedlichen Ausrichtung des zweiten Werkzeugs 30, erstreckt sich die Bohrung 35 des zweiten Werkzeugs 30 in die Bildebene von Fig. 2 hinein und ist folglich sichtbar.

Die beiden Werkzeuge 20, 30 sind wie auch schon bei Fig. 1 jeweils in einer Ausnehmung 4 angeordnet. Die Ausrichtung, insbesondere die Drehwinkelposition, der beiden Werkzeuge 20, 30 ist, wie bereits ausgeführt, unterschiedlich. Die Ausrichtung des zweiten Werkzeugs 30 ist in Bezug auf die Ausrichtung des ersten Werkzeugs 20 um 90° relativ zur jeweiligen Drehachse D verdreht.

In der Abbildung von Fig. 2 ist zu erkennen, dass jede Halteeinrichtung 10 jeweils zwei sich gegenüberliegend angeordnete Haltestege 11 aufweist. Die Haltestege 11 einer Halteeinrichtung 10 sind derart weit voneinander beabstandet, dass das entsprechende Werkzeug 20, 30 zwischen den beiden Haltestegen 11 anordenbar ist.

Wie in Fig. 2 ebenfalls zu erkennen, umfasst jedes Werkzeug 20, 30 jeweils eine Vertiefung 24, 34, die jeweils als Haltenut 24, 34 ausgebildet ist. Die Haltenuten 24, 34 korrespondieren mit den Haltestegen 11 der entsprechenden Halteeinrichtung 10. Das heißt, dass die Haltestege 11 der linken Halteeinrichtung 10 in die Haltenut 24 des ersten Werkzeugs 20 eingreifen, wenn das erste Werkzeug 20 zumindest abschnittsweise in der linken Ausnehmung 4 angeordnet ist. Die Haltestege 11 der rechten Halteeinrichtung 10 greifen in die Haltenut 34 des zweiten Werkzeugs 30 ein, wenn das zweite Werkzeug 30 zumindest abschnittsweise in der rechten Ausnehmung 4 angeordnet ist.

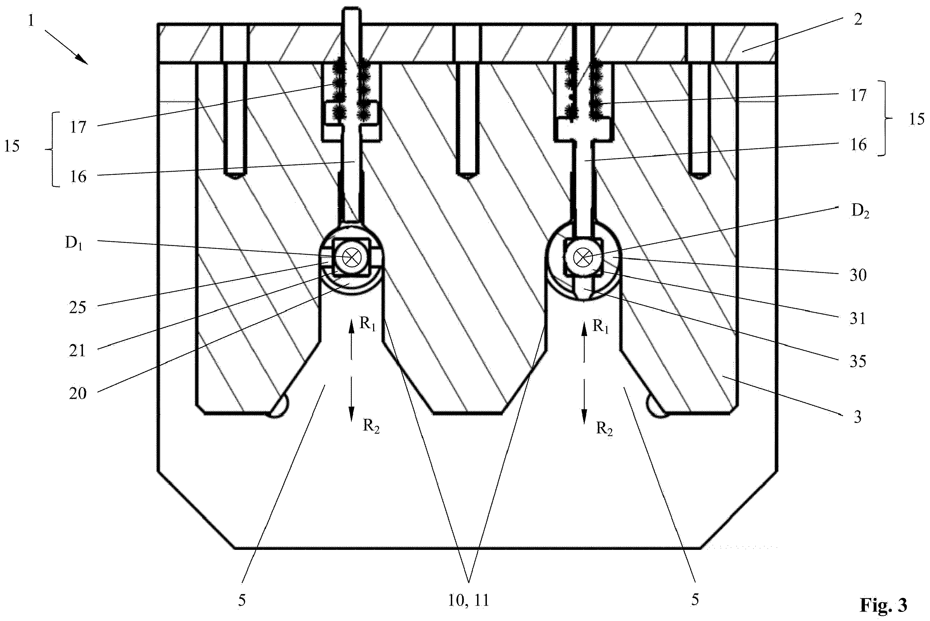

Fig. 3 zeigt eine Schnittansicht des Ausführungsbeispiels der Werkzeughaltevorrichtung. Die Schnittebene verläuft dabei durch die Haltestege 11 der Halteeinrichtungen 10.

Die Abbildung von Fig. 3 zeigt, dass sich die Halteeinrichtungen 10, insbesondere die Haltestege 11 der Halteeinrichtungen 10, in dem dargestellten Ausführungsbeispiel von der jeweiligen Öffnung 5 bis zu einem der Öffnung 5 gegenüberliegenden Ende der entsprechenden Ausnehmung 4 erstrecken. An den der Öffnungen 5 gegenüberliegenden Enden der entsprechenden Ausnehmungen 4 sind die Rotationsblockiereinrichtungen 15 angeordnet.

Wie in der Abbildung der Fig. 3 ebenfalls zu erkennen, umfasst jede Rotationsblockiereinrichtung 15 im dargestellten Ausführungsbeispiel jeweils ein Sicherungsmittel 16, welches als Sicherungsstift 16 ausgebildet ist. Das Sicherungsmittel 16 ist in Bezug auf den Grundkörper 3 zwischen einer Eingreifposition und einer Freigabeposition hin und her überführbar. Das Sicherungsmittel 16 der linken Rotationsblockiereinrichtung 15 befindet sich in der Freigabeposition. Das Sicherungsmittel 16 der rechten Rotationsblockiereinrichtung 15 befindet sich in der Eingreifposition.

Dies ist dadurch bedingt, dass die Bohrung 25 des ersten Werkzeugs 20 orthogonal zur Längsachse des Sicherungsmittels 16 der linken Rotationsblockiereinrichtung 15 ausgerichtet ist. Würde man das Werkzeug 20 nun 90° um die entsprechende Drehachse D₁ drehen, würde sich die Bohrung 25 analog der Bohrung 35 des zweiten Werkzeugs 30 ausrichten. Diese Ausrichtung bzw. Drehwinkelposition bewirkt, dass die Bohrung 35 koaxial zur Langsachse des entsprechenden Sicherungsmittels 16 ausgerichtet ist.

Ein Vorspannmittel 17 der Rotationsblockiereinrichtung 15, welches in dem dargestellten Ausführungsbeispiel als Spiralfeder 17 ausgebildet ist, bewirkt, dass das Sicherungsmittel 16 zumindest abschnittsweise in die entsprechende Bohrung 25, 35 hineingedrückt wird und dementsprechend von der Freigabeposition in die Eingreifposition überführt wird, wenn die entsprechende Bohrung 25, 35 koaxial zur Längsachse des Sicherungsmittels 16 ausgerichtet ist (in der in Fig. 3 gezeigten Abbildung ist dies nur bei dem zweiten Werkzeug 30 der Fall). Wenn sich das Sicherungsmittel 16 in der Eingreifposition befindet, wird ein weiteres Drehen des jeweiligen Werkzeugs 20, 30 um die entsprechende Drehachse D₁, D₂ blockiert.

Ein in den Figuren nicht dargestelltes Ausführungsbeispiel einer Werkzeugwechselvorrichtung umfasst neben einer Werkzeughaltevorrichtung 1 einen Roboterarm, der dazu ausgebildet ist, über die jeweilige Stecksatzausnehmung 21, 31 form- und/oder kraftschlüssig mit den Werkzeugen 20, 30 verbunden zu werden.

Zum Aufgeben eines Werkzeugs 20, 30, ist es beispielsweise denkbar, dass der Roboterarm das Werkzeug 20, 30 über die Öffnung 5 in die Einbringrichtung R₁ in die Ausnehmung 4 einschiebt. Dabei greift der Haltesteg 11 der Halteeinrichtung 10 am Ende der sich verengenden Öffnung 5 in die Haltenut 24, 34 des entsprechenden Werkzeugs 20, 30 ein, um eine zur Einbringrichtung R₁ orthogonale Bewegung des Werkzeugs 20, 30 zu verhindern. Wenn das Werkzeug 20, 30 das der Öffnung 5 gegenüberliegende Ende der Ausnehmung 4 erreicht hat, wird das Werkzeug 20, 30 dann so lange durch den Roboterarm der Werkzeugwechselvorrichtung um die Drehachse D₁, D₂ gedreht, bis das Sicherungsmittel 16 der Rotationsblockiereinrichtung 15 in die Bohrung 25, 35 des Werkzeugs 20, 30 eingreift und dadurch ein weiteres Drehen des Werkzeugs 20, 30 um die Drehachse D₁, D₂ blockiert wird.

Dieses Blockieren des Werkzeugs 20, 30 wird vorzugsweise durch einen Drehmomentsensor am Roboterarm detektiert. Der Roboterarm kann dann nach oben vom Werkzeug 20, 30 abgezogen werden, so dass sich die Verbindung zwischen dem Roboterarm und dem Werkzeug 20, 30 an der Stecksatzausnehmung 21, 31 löst.

Zum Aufnehmen des Werkzeugs 20, 30 kann der Roboterarm zumindest abschnittsweise von oben in die Stecksatzausnehmung 21, 31 des entsprechenden Werkzeugs 20, 30 eingreifen. Dabei ist die Ausrichtung der Stecksatzausnehmung 21, 31 aufgrund des oben beschriebenen Verfahrens zum Aufgeben des Werkzeugs 20, 30 vordefiniert bzw. standardisiert. Folglich kann der Roboterarm die Werkzeuge immer gleich aufnehmen.

### BEZUGSZEICHENLISTE

- 1: Werkzeughaltevorrichtung
- 2: Stativ
- 3: Grundkörper
- 4: Ausnehmung
- 5: Öffnung

- 10: Halteeinrichtung
- 11: Haltesteg

- 15: Rotationsblockiereinrichtung
- 16: Sicherungsmittel
- 17: Vorspannmittel

- 20: erstes Werkzeug
- 21: Stecksatzausnehmung
- 22: Werkzeuggrundkörper
- 23: Werkzeugkopf
- 24: Haltenut
- 25: Bohrung

- 30: zweites Werkzeug
- 31: Stecksatzausnehmung
- 32: Werkzeuggrundkörper
- 33: Werkzeugkopf
- 34: Haltenut
- 35: Bohrung

- R₁: Einbringrichtung
- R₂: Ausbringrichtung
- D₁: Drehachse des ersten Werkzeugs
- D₂: Drehachse des zweiten Werkzeugs

## Patentansprüche

1. Werkzeughaltevorrichtung (1) zum Halten von zumindest einem Werkzeug (20, 30), die Werkzeughaltevorrichtung (1) umfassend:
- einen ortsfesten Grundkörper (3) mit zumindest einer Ausnehmung (4) für das Werkzeug (20, 30),
- eine Halteeinrichtung (10), die dazu ausgebildet ist, die translatorische Bewegungsfreiheit des Werkzeugs (20, 30) in Bezug auf den Grundkörper (3) auf einen Freiheitsgrad zu beschränken, wenn das Werkzeug (20, 30) zumindest abschnittsweise in der Ausnehmung (4) angeordnet ist, und
- eine Rotationsblockiereinrichtung (15), die dazu ausgebildet ist, eine Drehbewegung des Werkzeugs (20, 30) in Bezug auf den Grundkörper (3) zu blockieren, wenn das Werkzeug (20, 30) eine vordefinierte Position und eine vordefinierte Ausrichtung in der Ausnehmung (4) aufweist.

2. Werkzeughaltevorrichtung (1) nach Anspruch 1, **dadurch gekennzeichnet, dass** die Rotationsblockiereinrichtung (15) unabhängig von der Halteeinrichtung (10) zwischen einem Freigabezustand und einem Blockierzustand überführbar ist, wobei die Rotationsblockiereinrichtung (15) in dem Freigabezustand dazu ausgebildet ist, eine Drehbewegung des Werkzeugs (20, 30) in Bezug auf den Grundkörper (3) freizugeben, und im Blockierzustand dazu ausgebildet ist, eine Drehbewegung des Werkzeugs (20, 30) in Bezug auf den Grundkörper (3) zu blockieren.

3. Werkzeughaltevorrichtung (1) nach einem der vorhergehenden Ansprüche, **dadurch gekennzeichnet, dass** die Rotationsblockiereinrichtung (15) ein Sicherungsmittel (16) aufweist, das in Bezug auf den Grundkörper (3) zwischen einer Eingriffposition und einer Freigabeposition überführbar ist, wobei das Sicherungsmittel (16) in der Eingriffposition dazu ausgebildet ist, zumindest abschnittsweise in das Werkzeug (20, 30) einzugreifen.

4. Werkzeughaltevorrichtung (1) nach Anspruch 3, **dadurch gekennzeichnet, dass** die Rotationsblockiereinrichtung (15) ein Vorspannmittel (17) aufweist, welches das Sicherungsmittel (16) in die Eingriffposition drückt und/oder zieht.

5. Werkzeughaltevorrichtung (1) nach einem der vorhergehenden Ansprüche, **dadurch gekennzeichnet, dass** die Halteeinrichtung (10) einen Haltesteg (11) aufweist, wobei der Haltesteg (11) dazu ausgebildet ist, mit einer Haltenut (24, 34) des Werkzeugs (20, 30) in Eingriff zu stehen, wenn das Werkzeug (20, 30) zumindest abschnittsweise in der Ausnehmung (4) angeordnet ist.

6. Werkzeughaltevorrichtung (1) nach Anspruch 5, **dadurch gekennzeichnet, dass** die Halteeinrichtung (10) zwei sich gegenüberliegend angeordnete Haltestege (11) aufweist und die zwei Haltestege (11) derart voneinander beabstandet sind, dass das Werkzeug (20, 30) zumindest abschnittsweise zwischen den zwei Haltestegen (11) anordenbar ist.

7. Werkzeughaltevorrichtung (1) nach einem der vorhergehenden Ansprüche, **dadurch gekennzeichnet, dass** die Ausnehmung (4)
- eine Öffnung (5) aufweist, über die das Werkzeug (20, 30) zumindest abschnittsweise in die Ausnehmung (4) einbringbar ist,
- die Halteeinrichtung (10) sich von der Öffnung (5) bis zu einem der Öffnung (5) gegenüberliegenden Ende der Ausnehmung (4) erstreckt, und
- die Rotationsblockiereinrichtung (15) an dem der Öffnung (5) gegenüberliegenden Ende der Ausnehmung (4) angeordnet ist.

8. Werkzeughaltevorrichtung (1) nach Anspruch 7, **dadurch gekennzeichnet, dass** die Öffnung (5) einen sich verengenden Querschnitt aufweist.

9. Werkzeugwechselvorrichtung, mit
- einer Werkzeughaltevorrichtung (1) nach einem der Ansprüche 1 bis 8, und
- einem Roboterarm, der dazu ausgebildet ist, zumindest ein Werkzeug (20, 30) an der Werkzeughaltevorrichtung (1) aufzugeben und aufzunehmen.

10. Verfahren zur Aufgabe eines Werkzeugs (20, 30) an einer
Werkzeughaltevorrichtung (1), insbesondere an einer Werkzeughaltevorrichtung (1) nach einem der Ansprüche 1 bis 8, das Verfahren umfassend die folgenden Verfahrensschritte:
- zumindest abschnittsweises Einbringen des Werkzeugs (20, 30) in einen Grundkörper (3) der Werkzeughaltevorrichtung (1), wobei mit und/oder nach dem Einbringen die translatorische Bewegungsfreiheit des Werkzeugs (20, 30) durch die Werkzeughaltevorrichtung (1) auf einen Freiheitsgrad beschränkt wird, und
- Drehen des Werkzeugs (20, 30) um eine Drehachse (D₁, D₂) bis eine Rotationsblockiereinrichtung (15) der Werkzeughaltevorrichtung (1) ein weiteres Drehen des Werkzeugs (20, 30) um die Drehachse (D₁, D₂) verhindert.
